(19) Europäisches Patentamt
European Patent Office
Office européen des brevets

(11) EP 4 019 340 A1

(12) **DEMANDE DE BREVET EUROPEEN**

(43) Date de publication:
**29.06.2022 Bulletin 2022/26**

(21) Numéro de dépôt: **21215879.4**

(22) Date de dépôt: **20.12.2021**

(51) Classification Internationale des Brevets (IPC):
***B60R 19/03*** (2006.01) ***B60R 19/34*** (2006.01)
***B60R 19/12*** (2006.01)

(52) Classification Coopérative des Brevets (CPC):
**B60R 19/34; B60R 19/03; B60R 19/12**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.12.2020 FR 2014080**

(71) Demandeur: **Compagnie Plastic Omnium SE**
**69007 Lyon (FR)**

(72) Inventeurs:
- **GINJA, Stéphane**
  **01150 SAINTE-JULIE (FR)**
- **ROUSSEL, Thierry**
  **01150 SAINTE-JULIE (FR)**
- **VIOT, Frédéric**
  **01150 SAINTE-JULIE (FR)**

(74) Mandataire: **LLR**
**11 boulevard de Sébastopol**
**75001 Paris (FR)**

(54) **ÉLÉMENT ABSORBEUR POUR VÉHICULE AUTOMOBILE**

(57) Élément absorbeur 1 pour véhicule automobile, comprenant une pièce d'absorption 3 en un matériau polymère moulé par injection, ladite pièce d'absorption 3 présentant une incompressibilité inférieure ou égale à 20 %, de préférence inférieure ou égale à 15 %, encore plus préférentiellement inférieure ou égale à 10%, et encore plus préférentiellement égale à environ 5 %.

[Fig. 2]

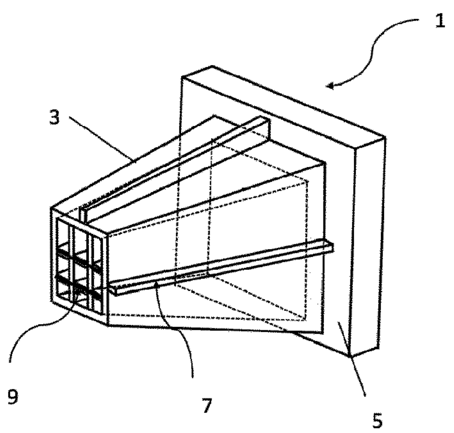


EP 4 019 340 A1

## Description

L'invention concerne le domaine des pare-chocs, plus particulièrement des éléments absorbeurs de choc, ou éléments absorbeurs, pour des systèmes d'absorption d'énergie, ou systèmes d'absorption de choc, pour véhicule automobile.

Dans la suite, on considère que le système d'absorption de chocs d'un véhicule automobile comprend les pièces du véhicule aptes à absorber de l'énergie lors d'un choc, notamment lors d'un choc haute vitesse. Ainsi, le système d'absorption peut comprendre une poutre transversale prenant appui sur les extrémités des longerons de la caisse en blanc du véhicule par l'intermédiaire d'une paire d'éléments absorbeurs de chocs, désignés « crash box » ou éléments absorbeurs dans la suite de la demande. Dans la présente demande, une paire d'éléments absorbeurs est un ensemble de deux éléments absorbeurs destinés à être positionnés, l'un sur le côté gauche du système d'absorption, l'autre sur le côté droit du système d'absorption, à une même hauteur dans le système d'absorption. On notera que les longerons font alors partie du système d'absorption de chocs. On rappelle qu'on appelle « caisse en blanc » du véhicule un ensemble structurel de ce véhicule, comportant un châssis, des longerons, ainsi que des montants latéraux des portes du véhicule.

En cas de choc, la poutre transversale peut travailler en flexion, si l'impact se trouve entre les deux longerons, ou sans flexion dans le cas où la poutre est trop rigide ou dans le cas où l'impact se produit au droit d'un longeron. Dans tous les cas, les éléments absorbeurs sont sollicités pour se déformer en absorbant une partie la plus importante possible de l'énergie du choc de manière que les longerons soient épargnés et que le véhicule puisse être réparé sans intervention sur sa caisse en blanc. Une telle voie d'absorption de chocs classique, s'appuyant sur les longerons de la caisse en blanc, est dite « voie haute d'absorption ».

Une telle voie haute permet de traiter des chocs frontaux haute vitesse (56 à 64 Km/h), ainsi que des chocs assurance. On rappelle qu'un choc « haute vitesse » correspond à un impact du véhicule contre un obstacle rigide ou déformable à une vitesse de 56 à 64 km/h, traité avec un objectif de protection des occupants du véhicule. Par ailleurs, un « choc assurance » est un choc du véhicule à environ 15 km/h contre un mur rigide, tel que celui connu sous le nom de Danner, ou encore « AZT », ou à environ 8 km/h contre un poteau (choc poteau, norme IIHS). Un tel choc est traité avec un objectif de réduction des coûts de réparations du véhicule et a fortiori de protection de la caisse en blanc du véhicule.

Certains véhicules comportent, en plus d'une telle voie haute d'absorption, une voie dite « voie basse d'absorption de chocs », s'appuyant sur des prolonges de berceau moteur, ou sur des petits longerons, sensiblement parallèles aux longerons de la voie haute mais situés à hauteur d'une poutre de choc piéton.

Dans le cas d'un véhicule automobile muni d'une voie basse, le véhicule comporte en voie basse une autre paire d'éléments absorbeurs, prenant appui en général sur une deuxième poutre transversale de voie basse. Une telle voie basse permet de traiter à la fois les chocs piéton, et les chocs assurance. On rappelle qu'un « choc piéton » sur pare-chocs correspond à un choc d'un impacteur simulant la jambe d'un piéton lancé à 40 km/h sur le pare-chocs.

Une telle voie basse permet de répartir l'énergie à absorber en cas de choc entre cette voie basse et la voie haute classique passant par les longerons. L'absorption d'énergie, notamment en cas de choc assurance, est alors généralement assurée principalement par la voie haute et de façon secondaire par la voie basse, par exemple aux 2/3 par la voie haute et à 1/3 par la voie basse. La voie absorbant le plus d'énergie (dans l'exemple cité la voie haute) est dite voie principale d'absorption d'énergie. L'autre voie est dite voie secondaire d'absorption d'énergie.

Dans ce système, l'élément absorbeur est une pièce destinée à être fixée sur une extrémité avant d'un châssis et qui s'étend dans une direction longitudinale du véhicule. L'élément absorbeur comprend une pièce d'absorption et une ou deux platines de fixation.

Sur un véhicule donné, le système d'absorption est pré-dimensionné par calcul, principalement en fonction de sa masse et du cahier des charges de choc et donc d'une énergie à pouvoir absorber sur une certaine course. Ce niveau d'énergie est défini par côté (droite ou gauche) pour correspondre aux essais physiques de validation réalisés ensuite pour l'homologation du véhicule, en choc frontal mais choc décalé sur un côté.

De nos jours, les constructeurs automobiles cherchent à réduire de plus en plus la consommation en énergie des véhicules automobiles, notamment en diminuant le poids de ceux-ci. Dans cette optique, ils cherchent à réduire à l'avant des roues du véhicule l'encombrement du pare-choc et du système d'absorption, en particulier celui de la poutre de choc transversale et des éléments absorbeurs dans la direction longitudinale. A l'avant du véhicule, une réduction de 50 mm de la longueur du véhicule, correspondant à une réduction de 50 mm de la distance entre l'avant de la poutre et l'arrière des éléments absorbeurs, induit un allègement du véhicule d'environ 5 kg. Cette réduction d'encombrement induit une réduction du porte-à-faux véhicule en avant des roues, ce qui permet aussi des libertés de style supplémentaires, notamment pour dessiner des pare-chocs plus verticaux et des capots plus courts.

Cependant, la réduction de cette distance (entre l'avant de la poutre de choc transversale et l'arrière des éléments absorbeurs), et donc du porte-à-faux, est limitée par les normes de sécurité qui exigent une résistance satisfaisante du système d'absorption de choc. Une façon de réduire le porte-à-faux est, pour un encombrement longitudinal constant ou inférieur de la pièce

d'absorption, d'augmenter la longueur efficace de la pièce d'absorption, c'est à dire la course sur laquelle la pièce d'absorption se déforme par écrasement avant d'atteindre son seuil d'incompressibilité caractérisé, sur un diagramme de relevé course/effort, par une forte montée en effort en fin de course du choc. Dans le cadre de cette invention, la compressibilité s'entend de la faculté d'un corps à se déformer au maximum, c'est-à-dire à laisser un résidu incompressible le plus faible possible. L'incompressibilité est le ratio entre la longueur restante formant le résidu incompressible et la longueur totale initiale avant le choc. Elle est exprimée comme un pourcentage de cette longueur totale. La compressibilité est le ratio entre la longueur efficace et la longueur totale initiale.

Une pièce d'absorption d'un élément absorbeur peut être caractérisée par son incompressibilité, sa longueur efficace, son tarage et sa capacité énergétique. La longueur de la pièce d'absorption est sa plus grande dimension, mesurée dans le sens longitudinal du véhicule lorsque la pièce d'absorption est montée sur le véhicule. La longueur efficace est la longueur sur laquelle la pièce d'absorption va se déformer pendant le choc, sous un effort de compression ne dépassant pas le tarage. Elle correspond à la longueur de la pièce d'absorption à l'exception du résidu incompressible. On entend par « tarage » de la pièce d'absorption l'effort maximal sous lequel la pièce d'absorption de l'élément absorbeur doit se déformer pendant le choc. L'effort réel dans la pièce d'absorption pendant le choc ne doit pas dépasser cet effort maximal, sous peine d'endommager la structure située à l'arrière. La limite en effort admissible par la structure du véhicule, notamment les longerons, est aussi appelée « tarage » dans le cahier des charges du constructeur automobile : le tarage de la pièce d'absorption doit être dimensionné pour être inférieur à celui du longeron. On entend par « capacité énergétique» la capacité de la pièce d'absorption à absorber l'énergie des chocs. La capacité énergétique est l'énergie maximale que la pièce d'absorption pourra absorber sur une course donnée et sans que la structure soit endommagée. L'énergie absorbée pendant l'impact est la résultante de l'effort sous lequel la pièce d'absorption se déforme pendant le choc et de la course d'enfoncement, correspondant à la longueur efficace. La capacité énergétique Ec est égale au produit de la longueur efficace $L_e$ et du tarage Fmax et peut être calculée selon l'équation :

[Math 1]

$$Ec = Fmax \times L_e$$

Sur un diagramme de relevé course/effort représentant l'effort maximal (le tarage) en fonction de la distance d'écrasement, la capacité énergétique est égale à l'aire sous la courbe.

À titre d'exemple, une pièce d'absorption métallique de 200 mm peut se déformer de 140 mm avant la montée en effort, soit une compressibilité de 70% ou autrement dit un résidu incompressible ou une incompressibilité de 30%. On cherche donc à augmenter la compressibilité des pièces d'absorption pour qu'elles puissent absorber le plus d'énergie possible en cas d'impact dans un encombrement axial réduit. Cet encombrement axial est principalement lié à la quantité d'énergie à absorber pendant le choc et est donc le total de la course d'écrasement (pendant laquelle l'énergie est absorbée), et du résidu incompressible restant à la fin. Autrement dit, on cherche à réduire la partie incompressible des pièces d'absorption.

On connaît également des pièces d'absorption moulées par injection, en polypropylène. Ces pièces d'absorption présentent également une incompressibilité d'environ 25 à 30 %.

On connaît aussi une pièce d'absorption composée de matière composite, dans laquelle la pièce d'absorption est composée de deux demi-coques intégrées chacune dans un élément de liaison. Le mode de liaison de ces demi-coques implique un mode de déformation de l'élément absorbeur de type bottelage favorisé par la liaison discontinue des deux demi-coques (vis, rivets,...) et par un amorçage qui s'effectue entre ces points de liaison (absorption d'énergie par déformation des vagues successives des demi-coques). Le mode de « bottelage » crée un résidu incompressible après choc aussi d'environ 25-30%.

On connait enfin de la demande de brevet français FR3061465, une pièce d'absorption en matériau composite ayant la forme d'un tube. Le matériau composite comprend une matrice en matière plastique et des fibres de renfort. Le tube est fabriqué par un procédé de production continu au travers d'une filière imposant une forme et une section constante, par exemple par pultrusion ou pultrusion réactive, ou encore par « pullwinding ». Dans le procédé de pullwinding, des fibres s'enroulent autour de la matière tirée par pultrusion. Le tube ainsi produit est capable de se désintégrer par délaminage, c'est-à-dire qu'il se cisaille dans son épaisseur longitudinalement, ce qui détruit une grande partie de la pièce d'absorption, de sorte qu'elle n'est plus d'un seul tenant. La compressibilité d'une telle pièce d'absorption est augmentée de façon conséquente. Une telle pièce d'absorption peut atteindre une compressibilité de 95 % et absorber plus de 10000J, par exemple 30000J par pièce d'absorption, soit 60000J pour une paire droite/gauche implantée sur un véhicule de 3,5 tonnes.

Une telle pièce d'absorption se détruit en grande partie lors du choc et doit être associée à au moins un élément de liaison dont le rôle est de maintenir la poutre reliée au véhicule après le choc. Une telle pièce d'absorption, dont la forme est un simple tube, ne peut pas être fixée directement au véhicule et nécessite aussi une ou deux platines d'interface, qui permettront sa fixation à la poutre et/ou au châssis. L'ensemble de la pièce d'absorption et de la ou des platines d'interface constitue un élément absorbeur. Ainsi, la mise en œuvre d'un tel élément absorbeur nécessitera non seulement la fabrication de la pièce d'absorption, mais également la fabrication du ou des élément(s) de liaison et de fixation, ainsi que l'assemblage de ces différentes pièces pour former un système d'absorption.

L'invention a notamment pour but de fournir des éléments absorbeurs présentant une bonne compressibilité, sans pour autant nécessiter une fabrication complexe, par exemple en diminuant le nombre de pièces à assembler. L'invention vise également à fournir des éléments absorbeurs dont les performances d'absorption peuvent être facilement modifiées, et dont la forme peut être facilement adaptée au véhicule qu'ils doivent équiper. Il est ainsi facile de concevoir et fabriquer un élément absorbeur adapté à un véhicule donné. En effet lors du développement pour un véhicule donné, il est facile lors des itérations de mise au point, de modifier légèrement le moule d'injection pour modifier les capacités d'absorption de l'élément absorbeur, et obtenir précisément l'élément absorbeur adapté au cahier des charges du véhicule pour lequel il est développé. Également, il est facile, à partir d'un élément absorbeur déjà développé pour un véhicule, de l'adapter pour un autre véhicule.

À cet effet l'invention a pour objet un élément absorbeur pour véhicule automobile, comprenant une pièce d'absorption en un matériau polymère moulé par injection, ladite pièce d'absorption présentant une incompressibilité inférieure ou égale à 20 %, de préférence inférieure ou égale à 15 %, encore plus préférentiellement inférieure ou égale à 10%, et encore plus préférentiellement égale à environ 5 %.

On entend par « matériau polymère » un matériau contenant majoritairement un ou plusieurs polymères.

Les éléments absorbeurs selon l'invention peuvent être utilisés par exemple pour gérer des chocs frontaux contre un obstacle à une vitesse d'environ 60 km/h, ou des chocs assurance à 15 km/h contre un mur fixe.

Pour moduler la capacité d'absorption, ou compressibilité, de la pièce d'absorption d'un tel élément d'absorption, il suffit d'effectuer des modifications du moule, qui sont très faciles et bien connues, comme modifier les nervures et parois de rigidification (ajout, suppression, position, épaisseur) ce qui offre beaucoup plus de possibilités de redimensionnement qu'avec une filière de pultrusion ou pullwinding. Il est donc plus facile de modifier les performances d'absorption des pièces d'absorption de tels éléments absorbeurs, que des pièces d'absorption de l'état de la technique issues de pultrusion ou pullwinding et aptes à se désintégrer par délaminage. On peut ainsi facilement développer un élément absorbeur qui viendra compléter un élément absorbeur préexistant développé pour un autre véhicule, et utiliser l'ensemble pour un nouveau véhicule. Enfin, l'élément absorbeur obtenu en moulage par injection ne nécessite pas d'être associé à une platine de fixation à rapporter lors de l'assemblage puisqu'avec ce procédé, il est bien connu de pouvoir combiner et obtenir des formes complexes et des fonctions techniques sur une même pièce lors de la même opération de moulage, les platines de fixation étant ainsi venues de matière avec la pièce d'absorption. Il n'est donc pas nécessaire de fabriquer des pièces supplémentaires de fixation, ni de les assembler ensuite avec l'élément absorbeur. De ce fait, les pièces d'absorption des éléments absorbeurs selon l'invention peuvent être plus facilement adaptées à la capacité d'absorption requise que la pièce d'absorption apte à se désintégrer par délaminage de l'état de la technique, issue de pultrusion, pultrusion réactive ou pullwinding, et leur fabrication est moins complexe.

Suivant d'autres caractéristiques optionnelles de l'élément absorbeur, prises seules ou en combinaison :

- Le matériau polymère comprend un copolymère, un élastomère et des fibres de renfort. On entend par « élastomère » un caoutchouc synthétique obtenu par polymérisation, présentant une grande restitution élastique. On entend par « fibres de renfort » un composant se présentant sous la forme d'éléments d'aspect filamenteux dont la résistance permet de renforcer un matériau auquel il est associé. De façon surprenante, les inventeurs ont montré que la fabrication en moulage par injection d'un élément absorbeur dans un tel matériau polymère, permet d'obtenir une pièce d'absorption dont le comportement au choc n'est pas une déformation plastique (compression / bottelage / ...) comme pour les pièces d'absorption classiques, en polypropylène injecté, en aluminium ou acier, ni un délaminage comme pour celles réalisées par pultrusion, pultrusion réactive ou pullwinding, mais un écrasement par une déstructuration / fragmentation globale de la matière formant les parois de l'élément absorbeur qui se propage sur toute la longueur utile (ou longueur efficace) pendant la course d'enfoncement due au choc. De cette manière, la compressibilité de la pièce d'absorption est augmentée de manière conséquente puisque la partie incompressible résiduelle peut être limitée à 20% et même aller jusqu'à 5 % ; cette compressibilité est similaire à ce qui peut être observé avec les pièces d'absorption de l'état de la technique, issues de pultrusion (classique, réactive ou pullwinding). La longueur nécessaire du système d'absorption de choc est alors réduite, contribuant à une réduction du porte-à-faux et un allègement considérable du véhicule.

Les pièces d'absorption selon l'invention peuvent avoir une capacité énergétique de 7000J, soit 14000J pour une paire droite/gauche implantée sur un véhicule.

- Dans le matériau polymère :
- le copolymère est un copolymère propylène-éthylène, qui constitue de 65 à 95 %, de préférence de 70 à 90 %, et encore plus préférentiellement 80 % en masse du matériau polymère,

- l'élastomère est un élastomère éthylène-octène ou un élastomère éthylène-butène, l'élastomère constituant de 1 à 20 % en masse du matériau polymère, de préférence de 2,5 à 10 %, et de façon encore plus préférentielle de 5 %, et
- les fibres de renfort sont des fibres de carbone d'une longueur allant de 4,5 mm à 7,5 mm, de préférence de 5,5 mm à 6,5 mm, et de façon encore plus préférentielle 6 mm, et d'un diamètre de 4,5 à 8,5 μm, de préférence de 5 à 8 μm, et de façon encore plus préférentielle 6 à 7 μm, qui constituent de 5 à 25 %, de préférence de 10 à 20 %, et encore plus préférentiellement 15 % en masse du matériau polymère.

Les inventeurs ont montré qu'un tel matériau est particulièrement avantageux en termes de compressibilité et d'énergie absorbée.

- Le copolymère propylène-éthylène comprend de 75 à 95 %, de préférence de 80 à 90 %, et de façon préférentielle 85 % en moles de chaînes propylène et comprenant de 5 à 25 %, de préférence de 10 à 20 %, et de façon préférentielle 15 % en moles de chaînes éthylène. De façon surprenante, une telle proportion d'éthylène dans le copolymère propylène-éthylène apporte une souplesse qui engendre une meilleure tenue aux chocs.
- L'élastomère est un élastomère éthylène-octène comprenant le motif :

[Chem 1]

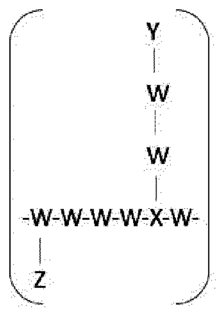

dans lequel :

W désigne CH2-CH2,
X désigne CH2-CH,
Y désigne CH2-CH3,
Z désigne CH3-(CH2)5-CH-CH2.

Les inventeurs ont montré que les élastomères éthylène-octène donnent de meilleurs résultats que les élastomères éthylène-butène en termes de propriétés mécaniques, en particulier au niveau de la résistance à l'impact à froid.

- L'élastomère éthylène-octène a une densité allant de 0,855 à 0,87, de préférence inférieure à 0,865. Les inventeurs ont montré que de tels élastomères éthylène-octène présentent un meilleur allongement à la rupture et une meilleure résistance à l'impact à froid que des élastomères éthylène-octène de densité supérieure. De façon préférentielle, l'élastomère est le produit ENGAGE™ 8842 de la société Dow.
- L'élément absorbeur comprend au moins une platine de fixation moulée par injection avec la pièce d'absorption. En plus des avantages liés à sa grande compressibilité, et à la facilité avec laquelle ces éléments absorbeurs peuvent être adaptés, un tel élément absorbeur est facilement fabriqué puisque la pièce d'absorption et la platine sont fabriquées lors du même moulage par injection. Il n'est donc pas nécessaire de fabriquer des pièces supplémentaires de fixation, ni de les assembler ensuite avec l'élément absorbeur.
- La pièce d'absorption est une pièce dont la section varie dans sa longueur, par exemple ayant la forme d'une pyramide, d'une pyramide tronquée ou tronc de pyramide, de cône, ou une forme tronconique.

L'invention a également pour objet un système d'absorption pour véhicule automobile, comprenant au moins une paire d'éléments absorbeurs tels que décrits ci-avant. De tels systèmes d'absorption, comprenant des éléments absorbeurs sont selon l'invention, présentent tous les avantages de l'élément absorbeur selon l'invention.

Suivant d'autres caractéristiques optionnelles du système d'absorption, prises seules ou en combinaison :

- Le système d'absorption de choc comprend une première paire d'éléments absorbeurs, dite première paire, et une deuxième paire d'éléments absorbeurs dite deuxième paire, la première paire étant positionnée sur le système d'absorption à une hauteur différente de celle de la deuxième paire.

Dans cette configuration, on pourra associer une paire d'éléments absorbeurs selon l'invention à une paire d'éléments absorbeurs selon l'état de la technique, ou bien deux paires d'éléments absorbeurs selon l'invention. De préférence, les éléments absorbeurs de l'état de la technique comprennent des pièces d'absorption aptes à se désintégrer par délaminage. Dans ce cas si l'on dispose déjà d'un élément absorbeur mis au point pour un véhicule de masse inférieure, présentant donc une capacité énergétique inférieure à la capacité énergétique requise, cet élément absorbeur apte à se désintégrer par délaminage peut être « complété » dans le présent système d'absorption par un élément absorbeur selon l'invention, fabriqué spécialement. Ainsi l'obtention d'un système d'absorption complet adapté à un nouveau véhicule nécessite uniquement l'utilisation d'un élément absorbeur déjà existant et d'un élément absorbeur selon

l'invention, facile à concevoir. Ce mode de réalisation permet d'adapter facilement un élément absorbeur connu à un autre véhicule.

En cas de système d'absorption de choc comprenant deux paires d'éléments absorbeurs selon l'invention, la forme des éléments absorbeurs de la première paire pourra être identique ou différente de celle des éléments absorbeurs de la deuxième paire (par exemple au niveau de l'épaisseur des parois, des nervures différentes, en nombre variable et dont la position peut également varier).

- Une pièce d'absorption d'un élément absorbeur de la première paire et une pièce d'absorption d'un élément absorbeur de la deuxième paire ont sensiblement la même longueur efficace et le même tarage.

Les pièces d'absorption des première et deuxième paires ayant sensiblement même longueur efficace et même tarage, il en résulte que ces pièces d'absorption ont sensiblement la même capacité énergétique.

On comprend donc que les éléments absorbeurs de la première paire et les éléments absorbeurs de la deuxième paire sont dimensionnés de la même façon, c'est-à-dire ont une longueur totale sensiblement identique, un tarage sensiblement identique, et par conséquent une capacité énergétique sensiblement identique. En effet, la compressibilité de la pièce d'absorption étant très élevée, la longueur totale de la pièce d'absorption est sensiblement égale à sa longueur efficace.

Un système d'absorption avec deux paires d'éléments absorbeurs selon l'invention pourra être utilisé dans un véhicule très léger, tel que par exemple un quadricycle sans longerons et comportant une structure verticale monobloc homogène en tarage sur laquelle sont directement fixés les éléments absorbeurs (par exemple une paroi formant un tablier séparant le compartiment sous capot (bloc moteur, ou coffre) de l'habitacle).

- Une pièce d'absorption d'un élément absorbeur de la première paire a une longueur efficace inférieure et un tarage supérieur à ceux d'une pièce d'absorption de la deuxième paire, de sorte qu'une pièce d'absorption de la première paire et une pièce d'absorption de la deuxième paire ont une capacité énergétique sensiblement identique.

Ce système d'absorption peut être utilisé en positionnant la première paire en regard de la voie haute de transmission des efforts d'un véhicule, et la deuxième paire en regard de la voie basse de transmission des efforts.

Dans ce cas, les pièces d'absorption positionnées en regard de la voie haute (pièces d'absorption hautes) ont une longueur totale inférieure, un tarage supérieur et une capacité énergétique sensiblement égale à ceux des pièces d'absorption positionnées en regard de la voie basse (pièces d'absorptions basses).

Cette configuration permet d'intégrer en voie haute le volume de la poutre, voire le volume de la poutre et le volume d'un absorbeur de chocs piétons, dans le même encombrement longitudinal que les éléments absorbeurs en voie basse. Autrement dit, dans cette configuration la fonctionnalité choc tout entière tient dans le même encombrement longitudinal, c'est à dire qu'aucune des deux voies ne « dépasse » de l'autre, ce qui créerait pour cette voie un porte-à-faux supplémentaire par rapport à l'encombrement de la voie la plus petite.

Avantageusement dans le cas où le système d'absorption comprend une paire d'éléments absorbeurs comprenant des pièces d'absorption aptes à se désintégrer par délaminage, celles-ci seront utilisées en voie haute. En effet ces pièces d'absorption de l'état de la technique peuvent absorber plus d'énergie sur des courses d'écrasement plus courtes.

Ce système d'absorption peut être également utilisé en positionnant la deuxième paire en regard d'une voie haute de transmission des efforts d'un véhicule, et la première paire en regard d'une voie basse de transmission des efforts.

Cette configuration pourra par exemple être utilisée pour un véhicule de type SUV (« sport utility vehicle »), dans lequel une troisième voie complémentaire de transmission des efforts existe, en-dessous de la voie haute, par exemple vers les ailes, qui pourra elle aussi être équipée d'un dispositif d'absorption.

- Une pièce d'absorption d'un élément absorbeur de la première paire a sensiblement la même longueur efficace et un tarage supérieur à ceux d'une pièce d'absorption de la deuxième paire.

Ce système d'absorption peut être utilisé en positionnant la première paire en regard de la voie haute de transmission des efforts d'un véhicule et la deuxième paire en regard de la voie basse de transmission des efforts.

Les pièces d'absorption hautes ont donc une longueur totale sensiblement identique et un tarage supérieur à ceux des pièces d'absorption basses, il en résulte que les pièces d'absorption hautes ont une capacité énergétique supérieure à celle des pièces d'absorption basses. Ce système d'absorption est donc adapté à des véhicules dans lesquels la voie haute est la voie principale de transmission d'énergie. Avantageusement dans le cas où le système d'absorption comprend une paire d'éléments absorbeurs de l'état de la technique (comprenant des pièces d'absorption aptes à se désintégrer par délaminage, acier, aluminium, ...), celles-ci seront utilisées en voie haute. En effet ces pièces d'absorption de l'état de la technique peuvent absorber plus d'énergie sur des distances plus courtes.

Ce système d'absorption peut être également utilisé en positionnant la deuxième paire en regard de la voie haute de transmission des efforts d'un véhicule automobile et la première paire en regard de la voie basse de transmission des efforts. Les pièces d'absorption hautes ont donc une longueur sensiblement identique et un tarage inférieur à ceux des pièces d'absorption basses, il en résulte que les pièces d'absorption hautes ont une capacité énergétique inférieure à celle des pièces d'absorption basses. Ce système d'absorption est donc adapté à des véhicules dans lesquels la voie basse est la voie principale de transmission d'énergie. Avantageusement dans le cas où le système d'absorption comprend une paire d'éléments absorbeurs de l'état de la technique (comprenant des pièces d'absorption aptes à se désintégrer par délaminage, acier, aluminium, ...), celles-ci seront utilisées en voie basse. En effet ces pièces d'absorption de l'état de la technique peuvent absorber plus d'énergie sur des distances plus courtes.

L'invention a également pour objets un véhicule automobile comprenant un système d'absorption comme décrit ci-avant.

Un autre objet de l'invention est un matériau polymère permettant la fabrication d'un élément absorbeur décrit ci-avant.

L'invention porte également sur un procédé de fabrication d'un élément absorbeur tel que décrit ci-avant, caractérisé en ce que l'on réalise la pièce d'absorption au moyen d'un procédé de moulage par injection du matériau polymère. Un tel procédé permet de fabriquer aisément des systèmes d'absorption de chocs présentant des capacités d'absorption de chocs adaptées à de nombreuses situations.

## Brève description des figures

L'invention sera mieux comprise à la lecture de la description qui va suivre donnée uniquement à titre d'exemple et faite en se référant aux dessins annexés dans lesquels :

[Fig. 1] la figure 1 montre un diagramme de relevé course / effort d'une pièce d'absorption, la pièce d'absorption étant en un matériau thermoplastique standard moulé par injection selon l'état de la technique (figure 1a), ou une pièce d'absorption selon l'invention (figure 1b), ainsi que la variation d'énergie absorbée en fonction de la longueur d'écrasement de la pièce d'absorption moulée par injection de l'état de la technique (figure 1a), ou pour la pièce d'absorption selon l'invention (figure 1b) ;

[Fig. 2] la figure 2 est une vue d'un élément absorbeur selon l'invention ;

[Fig. 3] la figure 3 est une vue d'un élément absorbeur selon l'invention assemblé avec un élément de liaison ;

[Fig. 4] la figure 4 est une vue en éclaté d'un système d'absorption selon un premier mode de réalisation de l'invention ;

[Fig. 5] la figure 5 est une vue assemblée du système d'absorption de la figure 4 ;

[Fig. 6] la figure 6 est une vue assemblée d'un système d'absorption selon un deuxième mode de réalisation de l'invention ;

[Fig. 7] la figure 7 est une vue assemblée d'un système d'absorption selon un troisième mode de réalisation de l'invention ;

[Fig. 8]

[Fig. 9]

[Fig. 10] les figures 8a, 8b et 8c, 9a, 9b et 10a, 10b, montrent chacune une représentation schématique d'un système d'absorption selon l'invention, accompagnée chacune d'un diagramme de relevé course / effort pour une pièce d'absorption de chaque paire d'éléments absorbeurs.

## Description détaillée

On a représenté sur la figure 1a un graphe supérieur montrant l'effort F d'écrasement d'une pièce d'absorption de l'état de la technique qui se déforme pendant un choc, par rapport à la distance d d'écrasement de la pièce d'absorption, et un graphe inférieur montrant l'énergie E absorbée par rapport à la distance d. Cette pièce d'absorption de l'état de la technique est dans un matériau polymère standard, moulé par injection. La pièce d'absorption est dimensionnée pour un effort maximal Fmax, dit tarage, sous lequel elle se déforme sur une longueur $L_e$ (longueur efficace). La pièce d'absorption présente également une longueur incompressible $L_i$ qui correspond à un résidu incompressible, constitué par un amas de matière écrasée. Cette longueur et ce résidu dits incompressibles, correspondent à la fin de la course d'écrasement, à partir du moment où l'amas de matière s'oppose plus intensément à l'écrasement, avec un effort devenant supérieur au tarage à Fmax. La longueur totale $L_t$ de la pièce d'absorption est la somme de ces deux longueurs $L_e$ et L. La pièce d'absorption est dimensionnée pour être utilisée dans un véhicule où seule la longueur efficace $L_e$ sera utilisée, afin de respecter le cahier des charges imposant d'absorber un niveau d'énergie donné, sur une course maximale, et avec un effort d'écrasement restant en dessous du tarage. Comme représenté, l'effort Fmax pendant le choc est constant et l'énergie E1 absorbée par cette pièce d'absorption de l'état de la technique pendant le choc peut être calculée selon la formule :

[Math 1]

$$E= F \times d.$$

Dans cette pièce d'absorption de l'état de la technique, la longueur incompressible $L_i$ représente environ 25 à 30% de la longueur totale $L_t$ de la pièce d'absorption.

On a représenté sur la figure 1b des graphes similaires obtenus pour une pièce d'absorption selon l'invention. La longueur incompressible $L_i$ est négligeable

et n'est pas représentée ici. La longueur efficace $L_e$ est presque égale à la longueur totale $L_t$. Par conséquent la longueur efficace $L_e$ est plus importante. Il en résulte que l'énergie E2 absorbée par cette pièce d'absorption selon l'invention est absorbée sur une plus grande longueur. Par rapport à une pièce d'absorption de l'état de la technique, il y a donc plus d'énergie absorbée dans un encombrement longitudinal identique.

On a représenté sur la figure 2 un exemple d'élément absorbeur selon l'invention, désigné par la référence générale 1. L'élément absorbeur 1 comprend une pièce d'absorption 3 et une platine de fixation 5. Dans cet exemple, la pièce d'absorption 3 est une pièce dont la section varie dans sa longueur. Plus précisément dans cet exemple, la pièce d'absorption 3 a la forme d'une pyramide tronquée. La pièce d'absorption pourrait également présenter une section constante, ou présenter par exemple la forme d'une pyramide, d'un cône, ou une forme tronconique, ou toute autre forme dans laquelle la section n'est pas constante. Dans l'élément absorbeur 1 représenté, la platine de fixation 5 est moulée par injection avec la pièce d'absorption 3. Cependant il pourrait être envisagé de fabriquer séparément la platine de fixation et de l'assembler à la pièce d'absorption. La pièce d'absorption 3 est représentée avec des nervures 7 de rigidification et des parois 9 de rigidification dont on peut faire varier le nombre, l'épaisseur et la position, pour moduler la capacité d'absorption de la pièce d'absorption 3.

L'élément absorbeur 1 est fabriqué en un matériau polymère moulé par injection. Il présente une incompressibilité inférieure ou égale à 20%. Le matériau polymère comprend un copolymère, un élastomère et des fibres de renfort. Le copolymère est un copolymère propylène-éthylène qui constitue de 65 à 95 % du matériau polymère. L'élastomère est un élastomère éthylène-octène constituant de 1 à 20 % en masse du matériau polymère. Les fibres de renfort sont des fibres de carbone d'une longueur allant de 4,5 mm à 7,5 mm et d'un diamètre de 4,5 à 8,5 µm, et constituent de 5 à 25 % du matériau polymère. Le copolymère propylène-éthylène comprend de 75 à 95 % en moles de chaînes propylène et comprend de 5 à 25 % en moles de chaînes éthylène. L'élastomère éthylène-octène comprend le motif :

[Chem 1]

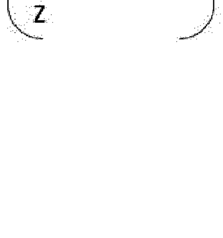

dans lequel :

W désigne CH2-CH2,
X désigne CH2-CH,
Y désigne CH2-CH3,
Z désigne CH3-(CH2)5-CH-CH2.
L'élastomère éthylène-octène a une densité allant de 0,855 à 0,87.

L'élément absorbeur 1 est représenté sur la figure 3 assemblé avec un élément de liaison 11 dont le rôle est de maintenir une poutre transversale 19 reliée au véhicule après le choc.

On a représenté sur les figures 4 et 5 un système d'absorption selon un premier mode de réalisation de l'invention, désigné par la référence générale 13. Le système d'absorption 13 comprend une première paire 15 d'éléments absorbeurs 1, ou première paire, et une deuxième paire 17 d'éléments absorbeurs 1a, ou deuxième paire. Le système d'absorption 13 comprend également une poutre transversale 19 qui prend appui sur les extrémités de longerons hauts 21 de la caisse en blanc du véhicule par l'intermédiaire de la première paire 15 d'éléments absorbeurs 1. Dans ce mode de réalisation, la première paire 15 est positionnée en regard de la voie haute de transmission des efforts du véhicule. Le système d'absorption 13 comprend également des longerons bas 24 positionnés en regard de la voie basse de transmission des efforts. Les longerons bas 24 sont équipés des éléments absorbeurs 1a de la deuxième paire 17. La première paire 15 est positionnée sur le système d'absorption 13 à une hauteur différente de celle de la deuxième paire 17.

Dans ce premier mode de réalisation, les éléments absorbeurs 1 et 1a des première et deuxième paires 15 et 17 sont des éléments absorbeurs selon l'invention. Dans l'exemple représenté, les pièces d'absorption de ces éléments absorbeurs 1 et 1a selon l'invention sont des pièces dont la section varie dans leur longueur. Elles ont la forme d'une pyramide tronquée. Ces pièces d'absorption selon l'invention pourraient également présenter une section constante, ou présenter par exemple la forme d'une pyramide, d'un cône, ou une forme tronconique, ou toute autre forme dans laquelle la section n'est pas constante.

Dans une première variante de ce premier mode de réalisation, représentée sur la figure 8b, la pièce d'absorption 3 de la première paire 15 a une longueur efficace telle que montrée sur le diagramme de relevé course / effort correspondant, c'est-à-dire la distance sur laquelle la pièce d'absorption s'écrase sous un effort limité au tarage à Fmax. Comme représenté sur les deux diagrammes de relevé course / effort, les longueurs efficaces des pièces d'absorption 3 de la première paire 15 et 3a de la deuxième paire 17 sont sensiblement les mêmes et les tarages (efforts maximaux) sont également sensiblement les mêmes. Il en résulte que les capacités énergétiques (aire sous la courbe) sont sensiblement les

mêmes. Ainsi, les éléments absorbeurs 1 de la première paire 15 et 1a de la deuxième paire 17 sont dimensionnés de la même façon, c'est-à-dire qu'ils ont le même tarage et la même longueur efficace. Ce système d'absorption 13 comprenant des éléments absorbeurs 1 et 1a selon l'invention, en voie haute et en voie basse pourra être utilisé sur un véhicule très léger.

Dans une deuxième variante de ce premier mode de réalisation, représentée sur la figure 9b, les deux diagrammes de relevé course / effort montrent que la longueur efficace de la pièce d'absorption 3 de la première paire 15 est inférieure à la longueur efficace de la pièce d'absorption 3a de la deuxième paire 17, et le tarage de la pièce d'absorption 3 de la première paire 15 est supérieur au tarage de la pièce d'absorption 3a de la deuxième paire 17. En outre, les deux diagrammes de relevé course / effort montrent que l'aire sous la courbe est sensiblement la même pour les deux pièces d'absorption 3 et 3a. Ainsi, une pièce d'absorption 3 d'un élément absorbeur 1 de la première paire 15 a une longueur efficace inférieure et un tarage supérieur à ceux d'une pièce d'absorption 3a de la deuxième paire 17, de sorte qu'une pièce d'absorption 3 de la première paire 15 et une pièce d'absorption 3a de la deuxième paire 17 ont une capacité énergétique sensiblement identique. Cette configuration permet d'intégrer en voie haute le volume de la poutre, voire le volume de la poutre et le volume d'un absorbeur de chocs piétons, l'ensemble présentant le même porte-à-faux que les éléments absorbeurs en voie basse. Autrement dit, dans cette configuration la fonctionnalité choc tout entière tient dans le même encombrement axial, c'est à dire qu'aucune des deux voies ne « dépasse » ce qui créerait pour cette voie un porte-à-faux supplémentaire par rapport à l'encombrement de la voie la plus petite.

Dans une troisième variante de ce premier mode de réalisation, représentée sur la figure 10b, les deux diagrammes de relevé course / effort montrent que la pièce d'absorption 3 de la première paire 15 et la pièce d'absorption 3a de la deuxième paire 17 ont sensiblement la même longueur efficace. De plus, le tarage de la pièce d'absorption 3 de la première paire 15 est supérieur au tarage au tarage de la pièce d'absorption 3a de la deuxième paire 17. Il en résulte que la capacité énergétique de la pièce d'absorption 3 de la première paire 15 est supérieure à la capacité énergétique de la pièce d'absorption 3a de la deuxième paire 17, comme le montrent les deux diagrammes de relevé course / effort dans lesquels l'aire sous la courbe est supérieure pour la pièce d'absorption 3 de la première paire 15.

On a représenté sur la figure 6 un système d'absorption selon un deuxième mode de réalisation de l'invention, désigné par la référence générale 23. Le système d'absorption 23 comprend une première paire 15 et une deuxième paire 17. Le système d'absorption 23 comprend également une poutre transversale 19 qui prend appui sur les extrémités de longerons hauts 21 de la caisse en blanc du véhicule par l'intermédiaire de la première paire 15. Dans ce mode de réalisation, la première paire 15 est positionnée en regard de la voie haute de transmission des efforts du véhicule. Le système d'absorption 23 comprend également des montants 25, appelés pendards, permettant de relier la voie basse de transmission des efforts à la voie haute. En voie basse, les pendards 25 sont équipés des éléments absorbeurs 1a de la deuxième paire 17.

Dans une variante de ce deuxième mode de réalisation, représentée sur la figure 8c, les longueurs efficaces des pièces d'absorption 3 de la première paire 15 et 3a de la deuxième paire 17 sont sensiblement les mêmes et les tarages sont également sensiblement les mêmes. Il en résulte que les capacités énergétiques sont sensiblement les mêmes. Ainsi, les éléments absorbeurs 1 de la première paire 15 et 1a de la deuxième paire 17 sont dimensionnés de la même façon. Ce système d'absorption 23 comprenant des éléments absorbeurs 1 et 1a selon l'invention, en voie haute et en voie basse pourra être utilisé sur un véhicule très léger.

On a représenté sur la figure 7 un système d'absorption selon un troisième mode de réalisation de l'invention, désigné par la référence générale 33. Ce système d'absorption 33 est similaire à celui des figures 4 et 5 en ce qu'il comprend une poutre transversale 19 qui prend appui sur les extrémités de longerons hauts 21 de la caisse en blanc du véhicule, et qu'il comprend des longerons bas 24 positionnés en regard de la voie basse de transmission des efforts, et équipés des éléments absorbeurs 1a de la deuxième paire 17. Dans ce mode de réalisation, la poutre transversale 19 prend appui sur les extrémités de longerons hauts 21 de la caisse en blanc par l'intermédiaire d'une première paire 35 d'éléments absorbeurs 31.

Dans ce troisième mode de réalisation, les éléments absorbeurs 31 de la première paire 35 sont des éléments absorbeurs selon l'état de la technique, aptes à se désintégrer par délaminage.

Dans une première variante de ce troisième mode de réalisation, représentée sur la figure 8a, la pièce d'absorption 313 de la première paire 35 a une longueur efficace telle que montrée sur le diagramme de relevé course / effort correspondant, c'est-à-dire la distance sur laquelle la pièce d'absorption subit l'effort maximal. Etant produite au travers d'une filière, cette pièce d'absorption 313 de l'état de la technique présente une section constante ; elle a ici la forme d'un tube. Comme représenté sur les deux diagrammes de relevé course / effort, les longueurs efficaces des pièces d'absorption 313 de la première paire 35 et 3a de la deuxième paire 17 sont sensiblement les mêmes et les tarages (efforts maximaux) sont également sensiblement les mêmes. Il en résulte que les capacités énergétiques (aire sous la courbe) sont sensiblement les mêmes. Ainsi, les éléments absorbeurs 31 de la première paire 35 et 1a de la deuxième paire 17 sont dimensionnés de la même façon, c'est-à-dire qu'ils ont le même tarage et la même longueur efficace.

Dans une deuxième variante de ce troisième mode de réalisation, représentée sur la figure 9a, les deux diagrammes de relevé course / effort montrent que la longueur efficace de la pièce d'absorption 313 de la première paire 35 est inférieure à la longueur efficace de la pièce d'absorption 3a de la deuxième paire 17, et le tarage de la pièce d'absorption 313 de la première paire 35 est supérieur au tarage de la pièce d'absorption 3a de la deuxième paire 17. En outre, les deux diagrammes de relevé course / effort montrent que l'aire sous la courbe est sensiblement la même pour les deux pièces d'absorption 313 et 3a. Ainsi, une pièce d'absorption 313 d'un élément absorbeur 31 de la première paire 35 a une longueur efficace inférieure et un tarage supérieur à ceux d'une pièce d'absorption 3a de la deuxième paire 17, de sorte qu'une pièce d'absorption 313 de la première paire 35 et une pièce d'absorption 3a de la deuxième paire 17 ont une capacité énergétique sensiblement identique. Dans cette variante, il est avantageux de disposer les pièces d'absorption 313 aptes à se désintégrer par délaminage en voie haute car elles peuvent absorber plus d'énergie sur des distances plus courtes. Il est ainsi possible d'utiliser le système d'absorption sur de plus gros véhicules. En outre, cette configuration permet d'intégrer en voie haute le volume de la poutre, voire le volume de la poutre et le volume d'un absorbeur de chocs piétons, l'ensemble présentant le même porte-à-faux que les éléments absorbeurs en voie basse. Autrement dit, dans cette configuration la fonctionnalité choc tout entière tient dans le même encombrement axial, c'est à dire qu'aucune des deux voies ne « dépasse » ce qui créerait pour cette voie un porte-à-faux supplémentaire par rapport à l'encombrement de la voie la plus petite.

Dans une troisième variante de ce troisième mode de réalisation, représentée sur la figure 10a, les deux diagrammes de relevé course / effort montrent que la pièce d'absorption 313 de la première paire 35 et la pièce d'absorption 3a de la deuxième paire 17 ont sensiblement la même longueur efficace. De plus, le tarage de la pièce d'absorption 313 de la première paire 35 est supérieur au tarage de la pièce d'absorption 3a de la deuxième paire 17. Il en résulte que la capacité énergétique de la pièce d'absorption 313 de la première paire 35 est supérieure à la capacité énergétique de la pièce d'absorption 3a de la deuxième paire 17, comme le montrent les deux diagrammes de relevé course / effort dans lesquels l'aire sous la courbe est supérieure pour la pièce d'absorption 313 de la première paire 35. Dans cette variante aussi, il est avantageux de disposer les pièces d'absorption 313 aptes à se désintégrer par délaminage en voie haute car elles peuvent absorber plus d'énergie sur des distances plus courtes. Il est ainsi possible d'utiliser le système d'absorption sur de plus gros véhicules.

L'invention n'est pas limitée aux modes de réalisation présentés et d'autres modes de réalisation apparaîtront clairement à l'homme du métier.

**Liste de références**

| | |
|---|---|
| 1, 1a : | élément absorbeur selon l'invention |
| 3, 3a : | pièce d'absorption selon l'invention |
| 5 : | platine de fixation |
| 7 : | nervure de rigidification |
| 9 : | paroi de rigidification |
| 11 : | élément de liaison |
| 13, 23, 33 : | système d'absorption |
| 15, 35 : | première paire d'éléments absorbeurs |
| 17 : | deuxième paire d'éléments absorbeurs |
| 19 : | poutre |
| 21 : | longerons hauts |
| 24 : | longerons bas |
| 25 : | pendards |
| 31 : | élément absorbeur selon l'état de la technique |
| 313 : | pièce d'absorption selon l'état de la technique |
| F : | effort |
| d : | course d'écrasement de la pièce d'absorption |
| E : | énergie absorbée |
| Fmax : | effort maximal, tarage |
| $L_e$ : | longueur efficace |
| $L_i$ : | longueur incompressible |
| $L_t$ : | longueur totale initiale |

**Revendications**

1. Élément absorbeur (1, 1a) pour véhicule automobile, comprenant une pièce d'absorption (3, 3a) en un matériau polymère moulé par injection, ladite pièce d'absorption (3, 3a) présentant une incompressibilité inférieure ou égale à 20 %, de préference inférieure ou égale à 15 %, encore plus préférentiellement inférieure ou égale à 10%, et encore plus préférentiellement égale à environ 5 %.

2. Élément absorbeur (1, 1a) selon la revendication 1, le matériau polymère comprenant un copolymère, un élastomère et des fibres de renfort.

3. Élément absorbeur (1, 1a) selon la revendication 2, dans lequel :

   - le copolymère est un copolymère propylène-éthylène, qui constitue de 65 à 95 %, de préférence de 70 à 90 %, et encore plus préférentiellement 80 % en masse du matériau polymère,,
   - l'élastomère est un élastomère éthylène-octène ou un élastomère éthylène-butène, l'élastomère constituant de 1 à 20 % en masse du matériau polymère, de préférence de 2,5 à 10 %, et de façon encore plus préférentielle de 5 %, et

- les fibres de renfort sont des fibres de carbone d'une longueur allant de 4,5 mm à 7,5 mm, de préférence de 5,5 mm à 6,5 mm, et de façon encore plus préférentielle 6 mm, et d'un diamètre de 4,5 à 8,5 μm, de préférence de 5 à 8 μm, et de façon encore plus préférentielle 6 à 7 μm, qui constituent de 5 à 25 %, de préférence de 10 à 20 %, et encore plus préférentiellement 15 % en masse du matériau polymère.

**4.** Élément absorbeur (1, 1a) pour véhicule automobile selon la revendication 3, dans lequel le copolymère propylène-éthylène comprend de 75 à 95 %, de préférence de 80 à 90 %, et de façon préférentielle 85 % en moles de chaînes propylène et comprenant de 5 à 25 %, de préférence de 10 à 20 %, et de façon préférentielle 15 % en moles de chaînes éthylène.

**5.** Élément absorbeur (1, 1a) pour véhicule automobile selon l'une quelconque des revendications 2 à 4, dans lequel l'élastomère est un élastomère éthylène-octène comprenant le motif :

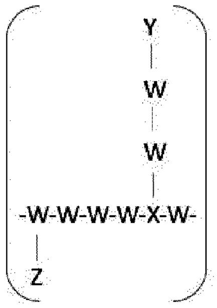

dans lequel :

W désigne CH2-CH2,
X désigne $CH_2$-CH,
Y désigne $CH_2$-CH3,
Z désigne $CH_3$-$(CH_2)_5$-CH-$CH_2$.

**6.** Élément absorbeur (1, 1a) pour véhicule automobile selon l'une quelconque des revendications 3 à 5, dans lequel l'élastomère éthylène-octène a une densité allant de 0,855 à 0,87, de préférence inférieure à 0,865.

**7.** Élément absorbeur (1, 1a) pour véhicule automobile selon l'une quelconque des revendications précédentes, comprenant au moins une platine de fixation (5) moulée par injection avec la pièce d'absorption (3, 3a).

**8.** Système d'absorption de choc (13, 23, 33) pour véhicule automobile, comprenant au moins une paire (15, 17) d'éléments absorbeurs (1, 1a) selon l'une quelconque des revendications précédentes.

**9.** Système d'absorption de choc (13, 23, 33) pour véhicule automobile selon la revendication précédente, comprenant une première paire (15, 35) d'éléments absorbeurs (1, 31), dite première paire, et une deuxième paire (17) d'éléments absorbeurs (1a) dite deuxième paire, la première paire (15, 35) étant positionnée sur le système d'absorption (13, 23, 33) à une hauteur différente de celle de la deuxième paire (17).

**10.** Système d'absorption (13, 23, 33) de choc pour véhicule automobile selon la revendication 9, dans lequel une pièce d'absorption (3, 313) d'un élément absorbeur (1, 31) de la première paire (15, 35) et une pièce d'absorption (3a) d'un élément absorbeur (1a) de la deuxième paire (17) ont sensiblement la même longueur efficace ($L_e$) et le même tarage (Fmax).

**11.** Système d'absorption (13, 33) de choc pour véhicule automobile selon la revendication 9, dans lequel une pièce d'absorption (3, 313) d'un élément absorbeur (1, 31) de la première paire (15, 35) a une longueur efficace ($L_e$) inférieure et un tarage (Fmax) supérieur à ceux d'une pièce d'absorption (3a) de la deuxième paire (17), de sorte qu'une pièce d'absorption (3, 313) de la première paire (15, 35) et une pièce d'absorption (3a) de la deuxième paire (17) ont une capacité énergétique sensiblement identique.

**12.** Système d'absorption (13, 33) de choc pour véhicule automobile selon la revendication 9, dans lequel une pièce d'absorption (3, 313) d'un élément absorbeur (1, 31) de la première paire (15, 35) a sensiblement la même longueur efficace ($L_e$) et un tarage (Fmax) supérieur à ceux d'une pièce d'absorption (3a) de la deuxième paire (17).

**13.** Véhicule automobile comprenant un système d'absorption (13, 23, 33) de chocs selon l'une quelconque des revendications 8 à 12.

**14.** Matériau polymère permettant la fabrication d'un élément absorbeur (1, 1a) selon l'une quelconque des revendications 1 à 7.

**15.** Procédé de fabrication d'un élément absorbeur (1, 1a) selon l'une quelconque des revendications 1 à 7, **caractérisé en ce que** l'on réalise la pièce d'absorption (3, 3a) au moyen d'un procédé de moulage par injection du matériau polymère.

[Fig. 1]

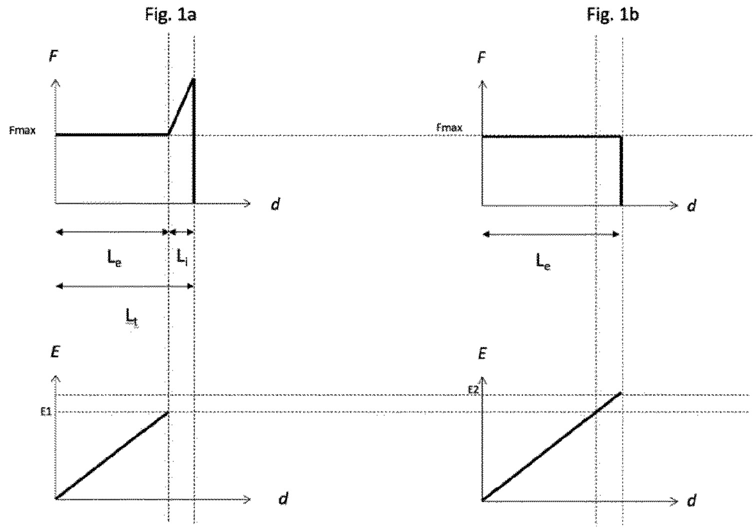


[Fig. 2]

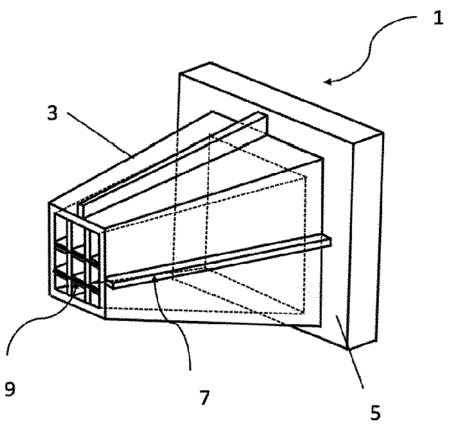


[Fig. 3]

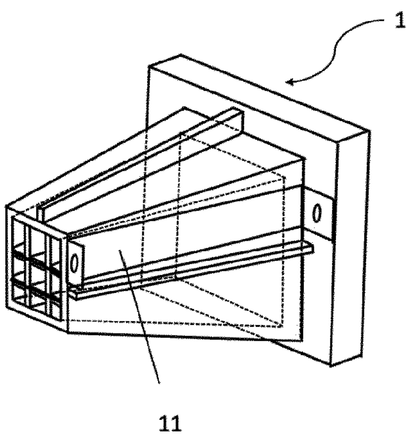

[Fig. 4]

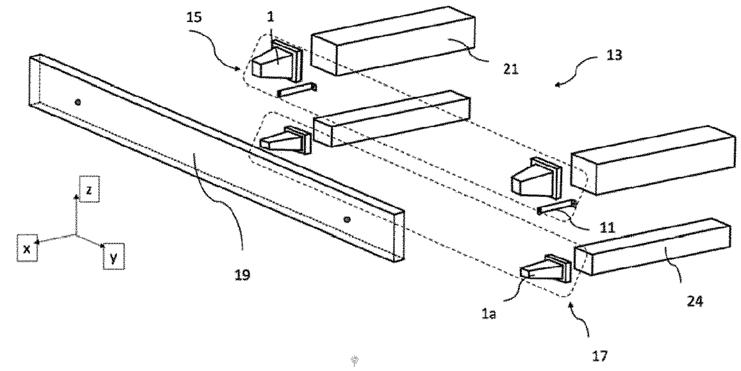


[Fig. 5]

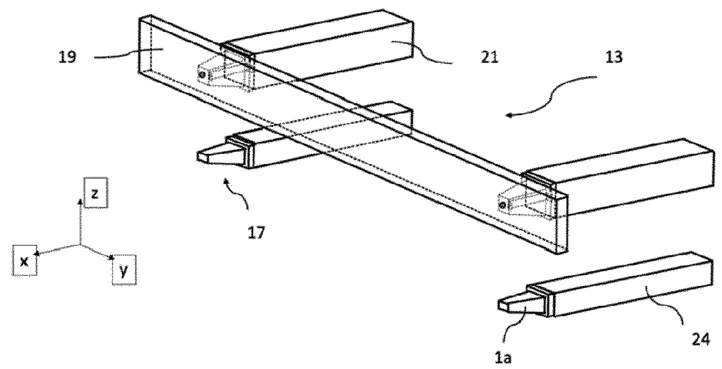


[Fig. 6]

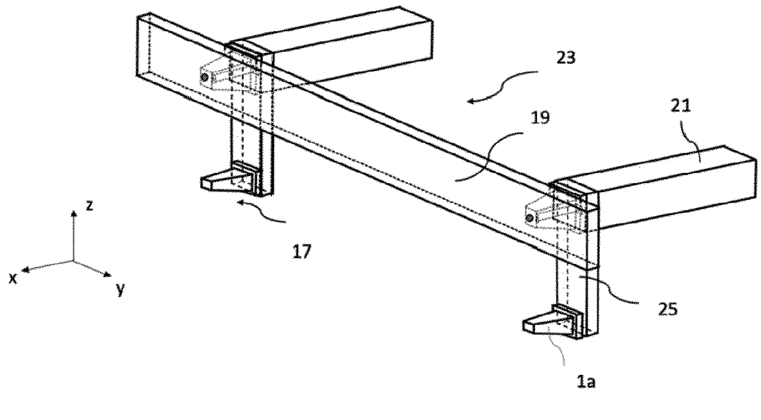

[Fig. 7]

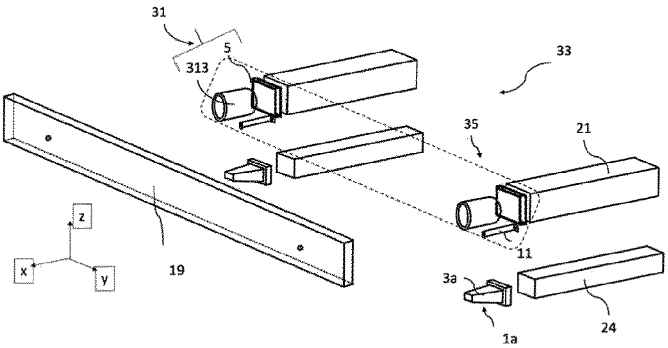
31
5
313
33
35
21
11
z
x
y
19
3a
24
1a

[Fig. 8]

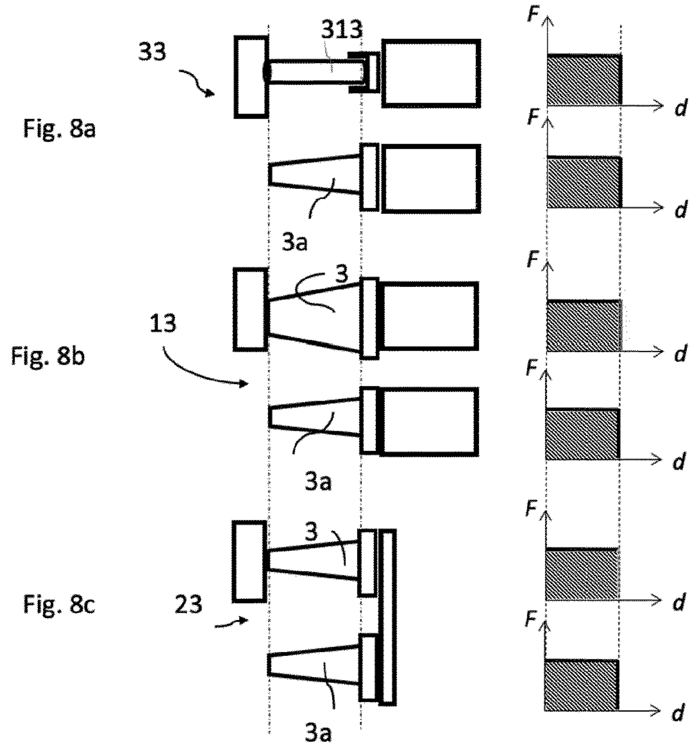
33
313
Fig. 8a
3a
3
13
Fig. 8b
3a
3
Fig. 8c
23
3a
F
d

[Fig. 9]

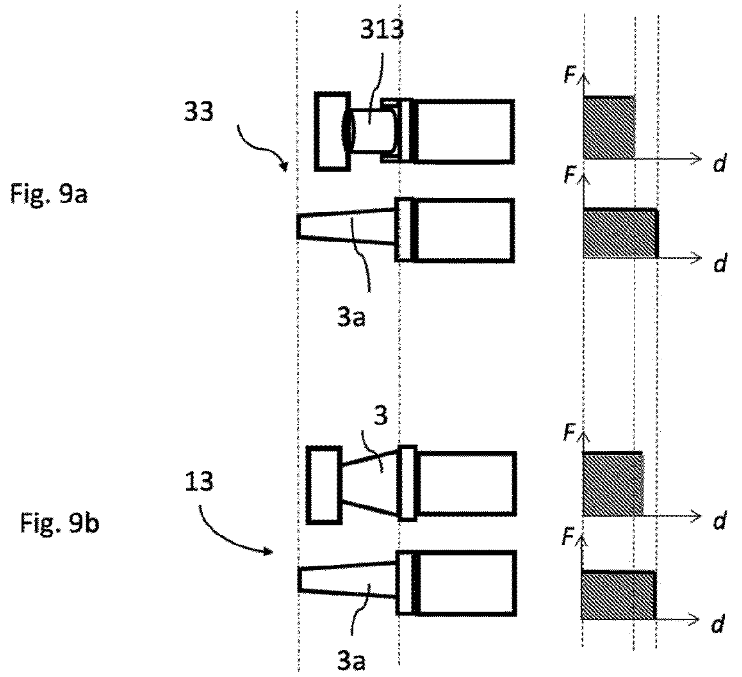
313
33
Fig. 9a
3a
3
13
Fig. 9b
3a
F
d
F
d
F
d
F
d

[Fig. 10]

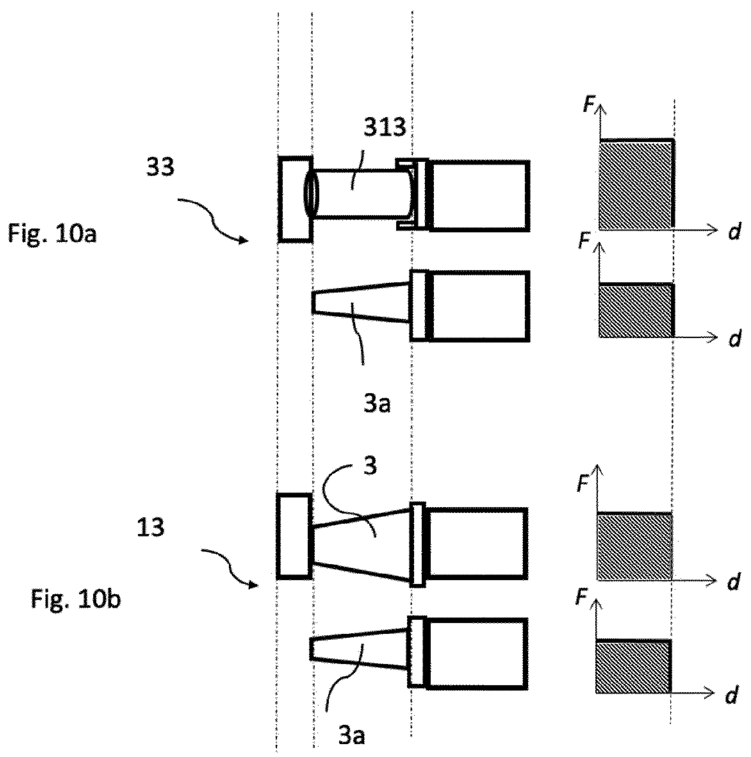
313
33
Fig. 10a
3a
3
13
Fig. 10b
3a
F
d
F
d
F
d
F
d

Europäisches Patentamt
European Patent Office
Office européen des brevets

# RAPPORT DE RECHERCHE EUROPEENNE

Numéro de la demande
EP 21 21 5879

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y | EP 3 738 839 A1 (PLASTIC OMNIUM CIE [FR]) 18 novembre 2020 (2020-11-18)<br>* alinéa [0020] - alinéa [0030]; figures 1-7 * | 1,2,7,8, 13-15<br>3-6,9-12 | INV.<br>B60R19/03<br>B60R19/34<br>B60R19/12 |
| Y | KR 2010 0058227 A (HYUNDAI MOTOR CO LTD [KR]; KIA MOTORS CORP [KR] ET AL.)<br>3 juin 2010 (2010-06-03)<br>* alinéa [0013] - alinéa [0025] * | 3-6 | |
| Y | DE 10 2009 031745 A1 (GM GLOBAL TECH OPERATIONS INC [US])<br>13 janvier 2011 (2011-01-13)<br>* figures 1-4 * | 9-12 | |
| A | CA 2 094 476 A1 (IDEMITSU PETROCHEMICAL CO [JP]) 22 octobre 1993 (1993-10-22)<br>* alinéa [0006] - alinéa [0012] * | 3-6 | |
| A | US 2009/200811 A1 (ERZGRAEBER MATTHIAS [DE] ET AL) 13 août 2009 (2009-08-13)<br>* figure 1 * | 9 | DOMAINES TECHNIQUES RECHERCHES (IPC) |
| A | EP 2 540 575 A2 (BENTELER AUTOMOBILTECHNIK GMBH [DE]) 2 janvier 2013 (2013-01-02)<br>* alinéa [0017]; figure 1 * | 9-12 | B60R |

Le présent rapport a été établi pour toutes les revendications

1

| Lieu de la recherche | Date d'achèvement de la recherche | Examinateur |
|---|---|---|
| Berlin | 20 avril 2022 | Topolski, Jan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 21 21 5879

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2022

| Document brevet cité au rapport de recherche | Date de publication | Membre(s) de la famille de brevet(s) | Date de publication |
|---|---|---|---|
| EP 3738839 A1 | 18-11-2020 | EP 3738839 A1 | 18-11-2020 |
| | | FR 3096005 A1 | 20-11-2020 |
| KR 20100058227 A | 03-06-2010 | AUCUN | |
| DE 102009031745 A1 | 13-01-2011 | AUCUN | |
| CA 2094476 A1 | 22-10-1993 | CA 2094476 A1 | 22-10-1993 |
| | | JP H069835 A | 18-01-1994 |
| US 2009200811 A1 | 13-08-2009 | AT 496802 T | 15-02-2011 |
| | | CN 101395041 A | 25-03-2009 |
| | | DE 102005059447 A1 | 14-06-2007 |
| | | EP 1963140 A1 | 03-09-2008 |
| | | US 2009200811 A1 | 13-08-2009 |
| | | US 2011175379 A1 | 21-07-2011 |
| | | WO 2007068334 A1 | 21-06-2007 |
| EP 2540575 A2 | 02-01-2013 | DE 102011051481 A1 | 03-01-2013 |
| | | EP 2540575 A2 | 02-01-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3061465